(19) **Europäisches Patentamt**

**European Patent Office**

**Office européen des brevets**

(11) Veröffentlichungsnummer: **0 445 110 B1**

(12) # EUROPÄISCHE PATENTSCHRIFT

(45) Veröffentlichungstag der Patentschrift: **09.06.93**

(21) Anmeldenummer: **89903108.2**

(22) Anmeldetag: **06.03.89**

(86) Internationale Anmeldenummer:
**PCT/DE89/00149**

(87) Internationale Veröffentlichungsnummer:
**WO 90/06008 (31.05.90 90/12)**

(51) Int. Cl.⁵: **H02G 5/06**

(54) **METALLGEKAPSELTE, DRUCKGASISOLIERTE HOCHSPANNUNGSANLAGE.**

(30) Priorität: **22.11.88 DE 3839736**

(43) Veröffentlichungstag der Anmeldung:
**11.09.91 Patentblatt 91/37**

(45) Bekanntmachung des Hinweises auf die
Patenterteilung:
**09.06.93 Patentblatt 93/23**

(84) Benannte Vertragsstaaten:
**AT CH DE FR GB IT LI NL SE**

(56) Entgegenhaltungen:
**CH-A- 558 092**
**FR-A- 2 196 535**
**US-A- 1 870 959**

(73) Patentinhaber: **SIEMENS AKTIENGESELL-SCHAFT**
**Wittelsbacherplatz 2**
**W-8000 München 2(DE)**

(72) Erfinder: **LORENZ, Dieter**
**Gärtnerstrasse 13**
**W-1000 Berlin 45(DE)**
Erfinder: **HAARHUIS, Jürgen**
**Jahnstrasse 17**
**W-1000 Berlin 61(DE)**
Erfinder: **LIESKE, Manfred**
**Heilmannring 30 b**
**W-1000 Berlin 13(DE)**

EP 0 445 110 B1

**Beschreibung**

Die Erfindung bezieht sich auf eine metallgekapselte, druckgasisolierte Hochspannungsanlage, deren Leiter oder Geräte in Gehäusen untergebracht sind, in denen sich die Leiter im wesentlichen in Richtung der Längsachse des Gehäuses erstrecken, und bei der die miteinander zu verbindende Gehäuse winklig zueinander stehende Längsachsen aufweisen und über ein zweiteiliges Zwischenstück verbunden sind, wobei die Gehäuse mit dem Zwischenstück jeweils über Flansche und diese durchsetzende Befestigungsmittel verbunden sind.

Aus der CH-A-558 092 ist eine derartige Hochspannungsanlage bekannt, die einen Wanderschaltblock bildet. Bei dieser dient das zweiteilige Zwischenstück als Schwenkvorrichtung und besteht aus einem in Umfangsrichtung zweiteiligen Ring mit Backen. Er dient dazu, die Durchführungen des Schaltblockes von der aufwärts gerichteten Betriebsstellung in eine ein kleineres Querprofil ergebene Transportstellung zu überführen.

Eine metallgekapselte Hochspannungsanlage kann aus in Schaltfeldern bestimmter Feldschaltung zusammengefaßten Geräten und/oder Rohrleitern bestehen, die jeweils in, insbesondere mit $SF_6$, druckgasgefüllten Gehäusen untergebracht sind. Dabei ist es üblich, die zu den Schaltfeldern gehörenden Geräte in den mit dem Druckgas gefüllten Gehäusen auf engsten Raum, z. B. in Gebäuden, unterzubringen, während Transformatoren oder Freileitungen, die ebenfalls zur Hochspannungsanlage gehören können, sich meist im Freien befinden und Anschlüsse mit untereinander wesentlich größeren Abständen aufweisen. Zur Verbindung mit diesen dienen meist gasgefüllte Rohrleiter. Daher ergibt sich die Notwendigkeit, daß Gehäuse untereinander verbunden werden müssen, deren Längsachsen winklig zueinander verlaufen. Auch Rohrleiter können an Verbindungsstellen untereinander Winkel zwischen 0° bis 90° zwischen den Längsachsen ihrer Gehäuse bzw. Leiter aufweisen.

Um nicht für derartige Knickpunkte entsprechende, jeweils besonders angepaßte Gehäuse vorsehen zu müssen, ist es aus dem DE-GM-72 33 316 bekannt, die zueinander winklig ausgerichteten Gehäuse und Leiter über ein zweiteiliges Zwischenstück zu verbinden, das jeweils mit Hilfe von Flanschen an den miteinander zu verbindenden Gehäusen z. B. der Feldschaltung und/oder des Rohrleiters, befestigt ist. Das bekannte zweiteilige Zwischenstück besteht aus zwei die Kapselung bildenden, miteinander verschweißten Kugelsegmenten als Gehäuse, in dem die Leiter im Kugelmittelpunkt miteinander verbunden sind. Dieses bekannte Zwischenstück ermöglicht zwar bei der Erstmontage eine leichte Anpassung an den zwischen den zu verbindenden Leitern gegebenen Winkeln. Nach Durchführung der Verschweißung ist aber das Zwischenstück unveränderbar diesem bestimmten Winkel zugeordnet.

Der vorliegenden Erfindung liegt die Aufgabe zugrunde, ein zweiteiliges Zwischenstück zur Verbindung winklig zueinander ausgerichteter Gehäuse einer metallgekapselten, druckgasisolierten Hochspannungsanlage so auszubilden, daß das Zwischenstück dem Winkel leicht angepaßt, jederzeit wieder leicht demontiert und auch wieder an andere Winkel zwischen 0° und 90° angepaßt werden kann.

Zur Lösung dieser Aufgabe ist eine metallgekapselte, druckgasisolierte Hochspannungsanlage der eingangs beschriebenen Art gemäß der Erfindung so ausgebildet, daß als Zwischenstück zwei stirnseitig anliegende, gegeneinander und gegen die Flansche gasdicht abgedichtete Ringe dienen, die jeweils auf einen inneren und einem äußeren Teilkreis Gewinde- oder Durchgangsbohrungen aufweisen und von denen jeder Ring über die Befestigungsmittel auf dem inneren Teilkreis an einem Flansch des Gehäuses befestigt ist, daß die Ringe untereinander über weitere Befestigungsmittel auf den äußeren Teilkreisen jeweils gleichen Durchmessers verbunden sind, wobei der Durchmesser der äußeren Teilkreise soviel größer als der Außendurchmesser der Flansche ist, daß die weiteren Befestigungsmittel außerhalb der Flansche liegen, daß die Bohrungen auf beiden Teilkreisen der Ringe eine unterschiedliche Lochteilung $\beta_i$, $\beta_a$ aufweisen, derart, daß beide Lochteilungen $\beta_i$, $\beta_a$ jeweils auf 90° oder 60° summierbar sind und daß auf einem der Ringe die Bohrungen auf dem äußeren Teilkreis als Langlöcher ausgebildet sind, deren Länge durch einen Winkel $\alpha$ gegeben ist, der sich als Quotient des Produktes der Lochteilungen $\beta_i$ $\beta_a$ durch den Bereich von 90° oder 60° ergibt, zu dem sich beide Lochteilungen jeweils summieren.

Die Verbindung zwischen den Gehäusen der Hochspannungsanlage mit winklig zueinander verlaufenden Längsachsen bzw. Leitern erfolgt also über die normalen Flansche der Gehäuse unter einfacher Zwischenschaltung von zwei stirnseitig aneinander anliegenden Ringen, die jeweils auf den inneren Teilkreisen mit den Flanschen des Gehäuses und auf den äußeren Teilkreisen untereinander verbunden werden.

Da sich die unterschiedlichen Lochteilungen $\beta_i$ und $\beta_a$ beider Teilkreise der Ringe jeweils entweder zu 90° oder zu 60° addieren, entstehen auf dem gesamten Umfang der Ringe jeweils um 90° bzw. 60° auseinander liegende Symmetrieachsen, auf denen beide Bohrungen jeweils übereinander liegen. Zwischen diesen Symmetrieachsen tritt dagegen jeweils zwischen den beiden Bohrungen des Ringes ohne Langlöcher ein Versatz unterschiedlicher Größe auf, der sich als Winkel

$$\delta_n = (n - 1)(\beta_i - \beta_a)$$

bestimmen läßt, wobei n jeweils ganze Zahlen von 1 bis $n_i$ bedeuten, wobei $n_i$ die Anzahl der Bohrungen auf dem inneren Teilkreis in dem Bereich zwischen zwei Symmetrieachsen ist.

Da weiterhin auf dem einen der Ringe Langlöcher vorgesehen sind, deren Länge dem Winkel entspricht, der in Beziehung zu dem Bereich zwischen den Symmetrieachsen steht, derart, daß

$$\alpha = \frac{\beta_i \cdot \beta_a}{90°} \text{ oder } \gamma = \frac{\beta_i \cdot \beta_a}{60°}$$

ist,

sind beide Ringe gegenseitig nach beiden Richtungen jeweils so verschiebbar bzw. einstellbar, daß sich bei jedem innerhalb des Bereiches zwischen den Symmetrieachsen liegenden Winkel $\alpha$ infolge des jeder Bohrung zugeordneten Versatzes eine Einstellung des Ringes ohne Langlöcher ergibt, in der mit Hilfe des Langloches auf dem anderen Ring sowohl die einander zugeordneten Bohrungen jeweils des Flansches und des Ringes auf dem inneren Teilkreis und die Bohrungen der Ringe auf dem äußeren Teilkreis so miteinander fluchten, daß sie die Befestigungsmittel aufnehmen können.

Die Gasdichtigkeit der Verbindung ist dabei durch eine entsprechende Wahl der Lochteilung $\beta_i$ auf dem inneren Teilkreis gewährleistet, da sich die Langlöcher auf den äußeren Teilkreis befinden, wo wegen des größeren Umfangs noch genügend Dichtfläche zur Verfügung steht. Bei dieser Anordnung können die zwischen den Ringen und zu den Flanschen notwendigen Gasdichtungen in beliebiger Weise jeweils auf einer der beiden Stirnseiten der Ringe oder auf den Flanschen angebracht werden.

Es ist vorteilhaft, bei einem gewählten Bereich von 90° zwischen den Symmetrieachsen die Gasdichtungen nur auf beiden Stirnflächen des Ringes mit den Langlöchern anzuordnen. Dann kann die Länge der Langlöcher nur den halben Winkel $\alpha$ betragen. Man erhält nämlich jetzt die volle Verschiebbarkeit durch ein Umklappen des Ringes mit den Langlöchern über zwei gegenüber liegende, einen Durchmesser bildenden Symmetrieachsen, wodurch eine Umwendung um 180° erzielt wird und die Langlöcher dann jeweils spiegelbildlich angeordnet sind.

Die Außendurchmesser der beiden Ringe des Zwischenstücks können unterschiedlich groß sein. Dann kann der größere Ring noch zur Anbringung zusätzlicher Befestigungen ausgenutzt werden, z. B. zur Befestigung einer Stütze. Auch die Außendurchmesser der Flansche können unterschiedlich sein, wenn dann die inneren Teilkreise des zugehörigen Ringe entsprechend angepaßt sind.

Die Flansche, an denen das zweiteilige Zwischenstück angeschlossen wird, können entweder auf der Stirnfläche oder der Mantelfläche der Gehäuse liegen, je nach dem, in welcher Ebene der Winkel zwischen den Längsachsen der miteinander zu verbindenden Gehäuse liegt. Eine besonders einfache Ausführung ergibt sich, wenn die Flansche der Gehäuse jeweils die gleiche Anzahl von Bohrungen auf dem inneren Teilkreis aufweisen, so als ob sie direkt miteinander verbunden werden würden. Dann haben auch beide Ringe den gleichen inneren Teilkreis mit der gleichen Anzahl von Bohrungen.

Das Eindringen von Verunreinigungen oder Feuchtigkeit über die Langlöcher kann in zweckmäßiger Weise dadurch verhindert werden, daß die Langlöcher auf dem äußeren Teilkreis des einen Ringes durch einen zusätzlichen Ring abgedeckt sind, der mit Bohrungen entsprechend der Lochteilung und dem Durchmesser der Bohrungen auf dem äußeren Teilkreis des anderen Ringes des Zwischenstücks versehen ist.

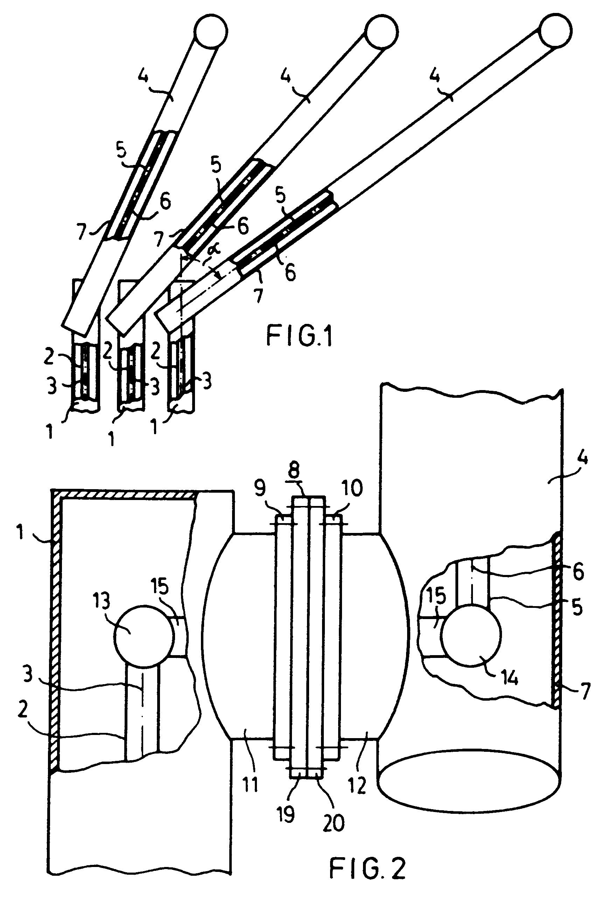

Im folgenden sei die Erfindung, die sowohl für einphasig als auch für mehrphasig gekapselte Anlagen und Rohrleiter angewendet werden kann, noch anhand der in den Figuren 1 bis 8 der Zeichnung dargestellten Ausführungsbeispiele näher erläutert.

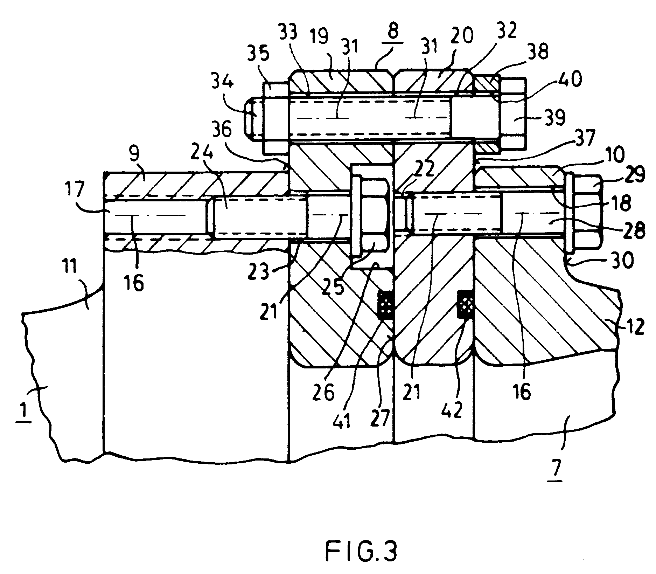

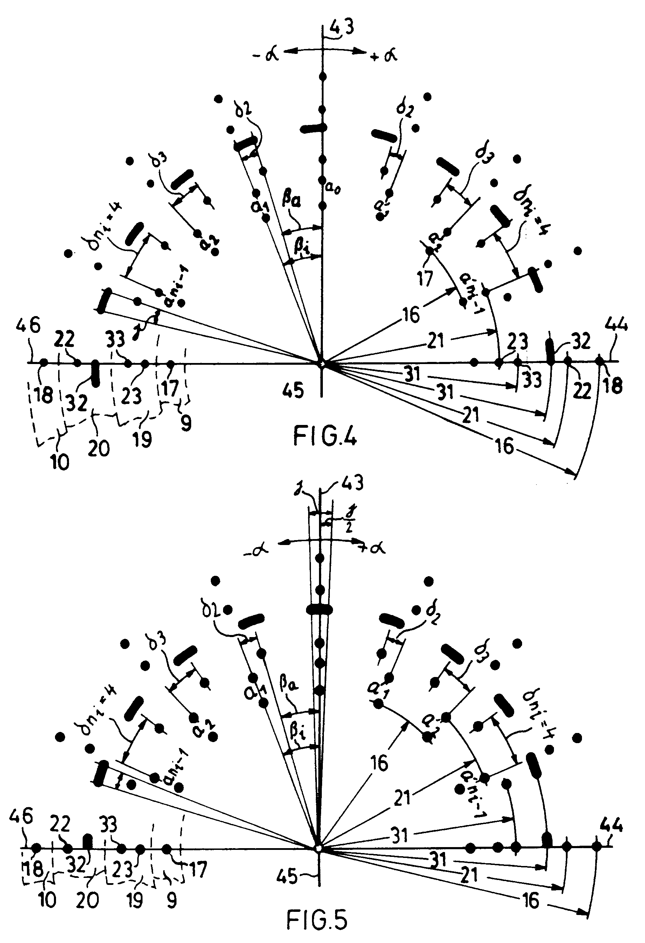

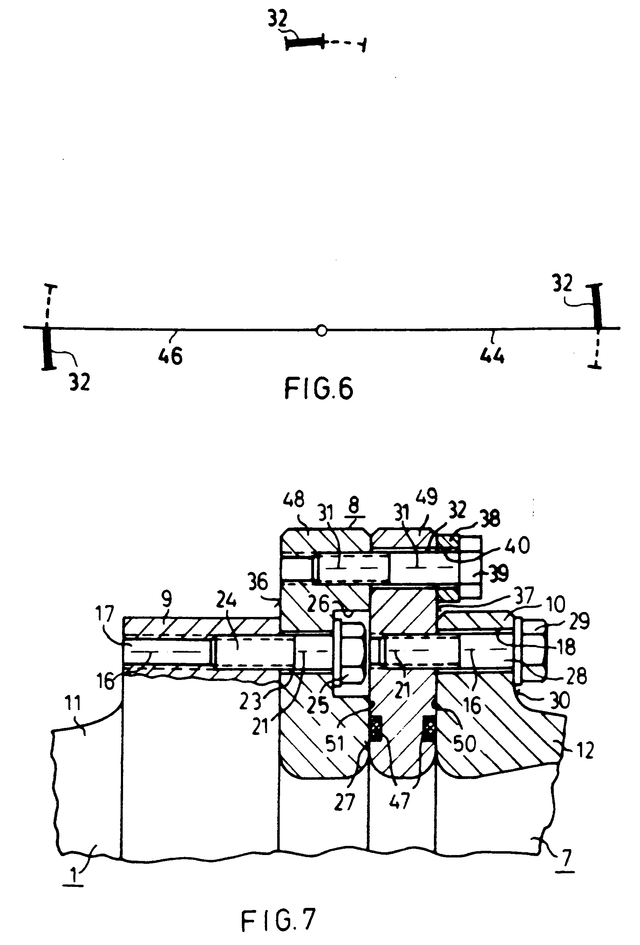

Figur 1 zeigt, schematisch dargestellt, drei einphasig gekapselte Gehäuse eines Schaltfeldes, die über Rohrleiter mit weiter auseinander liegenden Anschlüssen eines nicht dargestellten Anlageteils verbunden sind. In Figur 2 ist in vergrößertem Maßstab eine teilweise geschnittene Seitenansicht zu Figur 1 dargestellt. Die Figuren 3 und 7 zeigen jeweils einen Längsschnitt durch die Gehäuseflansche mit dem Zwischenstück, das in zwei leicht abgewandelten Ausführungen dargestellt ist. In den Figuren 4, 5 und 8 sind schematisch, jeweils auseinandergezogen, die Teilkreise auf den Flanschen und dem Zwischenstück mit der Anordnung der Bohrungen bzw. der Langlöcher in verschiedenen Variationen dargestellt. Die Figur 6 zeigt eine weitere prinzipielle Anordnung der Langlöcher.

Bei einer einphasig metallgekapselten, mit $SF_6$ druckgasisolierten Hochspannungsschaltanlage sind die in drei eng nebeneinander angeordneten Gehäusen 1 (siehe Fig. 1) untergebrachten Leiter 2, die zu einer Feldschaltung eines Schaltfeldes der Hochspannungsschaltanlage gehören und jeweils in Richtung der strichpunktiert angedeuteten Längsachse 3 der Gehäuse 1 parallel zueinander verlaufen, mit nicht dargestellten Freileitungsanschlüssen verbunden, die untereinander einen wesentlich größeren Abstand aufweisen. Die Verbindung erfolgt jeweils über einphasige Rohrleiter 4, deren mittig liegende Leiter 5 ebenfalls in Richtung der strichpunktiert angedeuteten Längsachse 6 der Gehäuse 7 verlaufen. Infolge der größeren Abstände zwischen den Freileitungsanschlüssen gegenüber den Abständen zwischen den Gehäusen 1 stehen die Leiter 2 im Gehäuse 1 und die Leiter 5 der Rohrleiter 4 jeweils winklig zueinander, wobei dieser Winkel $\alpha$ jeweils eine andere Größe hat.

Wie aus der in Fig. 2 dargestellten Seitenansicht eines der miteinander verbundenen Gehäuse 1 des Schaltfeldes und Gehäuse 7 des Rohrleiters 4 ersichtlich, erfolgt die Verbindung mit Hilfe eines zweiteiligen Zwischenstücks 8, das am Flansch 9 des Gehäuses 1 und am Flansch 10 des Gehäuses 7 des Rohrleiters 4 befestigt ist. Der Flansch 9 des Gehäuses 1 befindet sich auf einem Stutzen 11, der aus dem Gehäuse 1 rechtwinklig auf dessen Mantelfläche herausgeführt ist. Entsprechend schließt der Flansch 10 einen Stutzen 12 des Gehäuses 7 ab. Diese jeweils rechtwinklig aus den Gehäusen 1 bzw. 7 herausgeführten Stutzen 11 bzw. 12 werden durch das zweiteilige Zwischenstück 8 miteinander derart verbunden, daß der gewünschte Winkel $\alpha$ zwischen der Längsachse 3 des Gehäuses 1 und der Längsachse 6 des Gehäuses 7 entsteht. Der Leiter 2 im Gehäuse 1 endet deshalb in einer Kugel 13, und der Leiter 5 des Rohrleiters 4 endet in einer Kugel 14. Zwischen beiden Kugeln 13, 14 befindet sich der Verbindungsleiter 15, der jeweils rechtwinklig zu den Leitern 2 bzw. 5 steht und die Stutzen 11, 12 sowie das Zwischenstück 8 mittig durchsetzt.

Beide Flansche 9, 10 weisen auf einem gleichen Teilkreis 16 (angedeutet in Figur 3) liegende Bohrungen 17, 18 gleicher Lochteilung $\beta_{16}$ auf. Da diese Teilkreise 16 auch jeweils den gleichen Durchmesser haben, werden die Bohrungen 17, 18 in den Flanschen 9, 10 so gefertigt, als würden sie durch die Befestigungsmittel unmittelbar miteinander verbunden. Ihre Verbindung erfolgt aber über das zweiteilige Zwischenstück 8.

Dieses zweiteilige Zwischenstück 8 besteht aus zwei Ringen 19, 20, von denen der Ring 19 mit dem Flansch 9 und der Ring 20 mit dem Flansch 10 verbunden ist. Dazu weisen beide Ringe 19, 20 auf einem inneren Teilkreis 21 (angedeutet in der Figur 3), der dem Teilkreis 16 entspricht, liegende Bohrungen 22, 23 auf, deren Durchmesser und Lochteilung $\beta_i$ mit dem Durchmesser der Bohrungen 17, 18 und der Lochteilung $\beta_{16}$ übereinstimmt. Die Lochteilungen $\beta_i = \beta_{16}$ bestimmem sich entsprechend der geforderten Gasdichtigkeit der Flansche 9, 10.

Als Befestigungsmittel zwischen dem Flansch 9 und dem Ring 19 dienen Schrauben 24, welche die durchgehende Bohrung 23 des Ringes 19 durchsetzen und in die mit Gewinde versehene Bohrung 17 des Flansches 9 eingeschraubt sind. Der Kopf 25 der Schraube 24 liegt in einer Ansenkung 26 der Bohrung 23, die von der inneren Stirnfläche 27 des Ringes 19 ausgeht. Der andere Ring 20 ist durch Schrauben 28 am Flansch 10 befestigt, die in die mit Gewinde versehenen Bohrungen 22 eingeschraubt sind und deren Kopf 29 sich auf der äußeren Stirfläche 30 des Flansches 10 abstützt. Diese Anordnung hat den Vorteil, daß die Schrauben 24 und 28 die gleichen Abmessungen aufweisen.

Beide Ringe 19, 20 des Zwischenstücks 8 sind außerdem untereinander verbunden. Dafür sind in beiden Ringen 19, 20 auf dem gleichen äußeren Teilkreis 31 (ebenfalls angedeutet) liegende Bohrungen 32, 33 vorgesehen, die von den als weitere Befestigungsmittel dienenden Bolzen 34 durchsetzt sind. Die Mutter 35 der Bolzen 34 liegt jeweils an der äußeren Stirnfläche 36 des Ringes 19 an.

Auf der entgegengesetzten äußeren Stirnfläche 37 des Ringes 20 ist dagegen ein weiterer Ring 38 vorgesehen, der zwischen der Stirnfläche 37 und dem Kopf 39 des Bolzens 34 liegt. Dieser Ring 38 enthält seinerseits Bohrungen 40, deren Durchmesser und Lochteilung denen der äußeren Bohrungen 33 entspricht. Der Ring 38 dient zur Abdeckung der als Langlöcher 32 ausgebildeten Bohrungen 32 im Ring 20, damit diese gegen das Eindringen von Verunreinigungen und Feuchtigkeit geschützt sind.

Die Gasdichtigkeit der beiden Ringe 19, 20 des Zwischenstücks 8 gegeneinander wird durch einen Dichtring 41 hergestellt, der an der inneren Stirnfläche 27 des Ringes 19 angeordnet ist. Ein weiterer Dichtring 42 ist in der äußeren Stirnfläche 37 des Ringes 20 angeordnet und dichtet somit den Ring 20 gegenüber den Flansch 10 ab.

Zum Erreichen der winkligen Einstellbarkeit der Verbindung zwischen beiden Gehäusen 1 und 7 entsprechend einem beliebigen Winkel $\pm \alpha$ zwischen den Längsachsen 3 und 6, der zwischen 0 bis 90° liegen soll, werden am zweiteiligen Zwischenstück 8 folgende Bedingungen eingehalten:
Die Lochteilungen $\beta_i$ und $\beta_a$ werden so gewählt, daß sie sich auf 90° summieren. Dieser Winkel von 90° legt auch den Bereich zwischen den vier Symmetrieachsen 43, 44, 45, 46 fest. Diese stehen jeweils senkrecht aufeinander (siehe Fig. 4 und 5), wobei die Symmetrieachsen 43, 45 vertikal und die Symmetrie-

4

achsen 44, 45 horizontal verlaufen und jeweils einen Durchmesser bilden.

Dadurch ergibt sich weiterhin eine ganze Zahl $n_i$ bzw. $n_a$ von Bohrungen 22, 32 bzw. 23, 33 auf dem zwischen den Symmetrieachsen 43, 44, 45, 46 liegenden Bereichen des inneren bzw. äußeren Teilkreises 32, 31 der Ringe 19, 20. Dabei muß natürlich auf dem inneren Teilkreis 21 die erforderliche Gasdichtigkeit gegeben ist.

Es gilt mithin die Beziehung

$$n_i \cdot \beta_i = 90° = n_a \cdot \beta_a.$$

wobei

$$n_i \neq n_a \quad und \quad \beta_i \neq \beta_a$$

ist.

In der Figur 4 ist schematisch mit auseinandergezogenen Teilkreisen die Verteilung der Bohrungen 17, 23, 32, 33, 22, 18 auf dem Flansch 9, den Ringen 19, 20 und dem Flansch 10 eines bestimmten Ausführungsbeispiels dargestellt.

Bei diesem Ausführungsbeispiel ist auf dem inneren Teilkreis 21 die Lochteilung $\beta_i = 22,5°$ und auf dem äußeren Teilkreis 31 $\beta_a = 18°$ gewählt.

Daraus folgt $n_i = 4$ und $n_a = 5$, so daß beide Teilkreise 21, 31 eine unterschiedliche Anzahl von Bohrungen 22, 23; 32, 33 für die Befestigungsmittel 24, 28 und die weiteren Befestigungsmittel 34 aufweisen.

Demzufolge liegen auf den Ringen 19, 20 die Bohrungen 23, 33 bzw. 22, 32 jeweils nur auf den senkrecht aufeinander stehenden, d. h. um 90° auseinander liegenden Symmetrieachsen 43, 44, 45, 46 übereinander, d. h. nur nach jeweils 90° befinden sich beide Bohrungen 23, 33 bzw. 22 32 eines Ringes 19, 20 auf dem gleichen Radius.

Als Versatz (Winkel $\delta$) zwischen den Bohrungen 23 des inneren Teilkreises 21 und den Bohrungen 33 des äußeren Teilkreises 31 auf dem Ring 19 gilt die Beziehung

$$\delta_n = (n - 1)(\beta_i - \beta_a)$$

wobei n jeweils ganze Zahlen bis $n_i$, d. h. von eins bis vier bedeutet.

Mithin ist

$$\delta_1 = 0°$$
$$\delta_2 = (2 - 1)(22,5° - 18°) = 4,5°$$
$$\delta_3 = (3 - 1)(22,5° - 18°) = 9°$$
$$\delta_4 = (4 - 1)(22,5° - 18°) = 13,5°.$$

Auf dem äußeren Teilkreis 31 des Ringes 20 sind die äußeren Bohrungen 32 als Langlöcher 32 ausgebildet. Deren Länge ergibt sich als Winkel

$$\gamma = \frac{\beta_i \cdot \beta_a}{90°} = \frac{22,5° \cdot 18°}{90°} = 4,5°$$

Entsprechend gibt es zu jedem Versatz, nämlich zu jedem Winkel o durch die vorhandenen fünf Langlöcher 32, die eine zusätzliche Verschiebung beider Ringe 19, 20 gegeneinander erlauben, noch fünf einstellbare Winkelbereiche, so daß sich insgesamt eine Anzahl

$$z = n_i \cdot n_a = 4 \cdot 5 = 20$$

einstellbare Winkelbereiche für den Winkel $\pm \alpha$ ergibt.

Die Winkel $\alpha$, d. h. der gegebene Winkel zwischen den Längsachsen der Gehäuse 1, 7 ist jeweils zur oberen vertikalen Symmetrieachse 43 gezählt. Die Tabelle 1 zeigt nun die einem bestimmten Versatz $\delta$ jeweils zugeordneten einstellbaren Winkelbereiche.

Den Bohrungen 23 des Ringes 19 sind entsprechend der Figur 4 in der Tabelle 1 jeweils die Bezeichnungen

$$a_0, \; a_1 \ldots a_{n_i - 1}$$

bzw.

$$a'_0, \; a'_1 \ldots a'_{n_i - 1}$$

zugeordnet.

Tabelle 1:

| $\alpha°$ (Winkel) | | | |
|---|---|---|---|
| $\delta_1 = 0°$ ($a_0$ über X) | $\delta_2 = 4,5°$ ($a_1$ über X) | $\delta_3 = 9°$ ($a_2$ über X) | $\delta_4 = 13,5°$ ($a_3$ über X) |
| 0 – 4,5 | 4,5 – 9 | 9 – 13,5 | 13,5 – 18 |
| 18 – 22,5 | 22,5 – 27 | 27 – 31,5 | 31,5 – 36 |
| 36 – 40,5 | 40,5 – 45 | 45 – 49,5 | 49,5 – 54 |
| 54 – 58,5 | 58,5 – 63 | 63 – 67,5 | 67,5 – 72 |
| 72 – 76,5 | 76,5 – 81 | 81 – 85,5 | 85,5 – 90 |

$n_a$

$n_i$

Aus dieser Tabelle 1 ergibt sich, daß der Bereich von 0 bis ± 90° vollständig überdeckt ist, so daß durch das dem Versatz $\delta$ entsprechende Ausrichten des Ringes 19 auf die obere vertikale Symmetrieachse 43, die z. B. der Längsachse 3 entsprechen soll, und das durch das Langloch 32 mögliche Drehen der beiden Ringe 19, 20 gegeneinander in zwei unterschiedliche Richtungen insgesamt ein Einstellbarkeitsbereich von 180° gegeben ist.

Bezogen auf das in den Figuren 3 und 4 dargestellte Ausführungsbeispiel wird nun die Einstellung des Zwischenstücks 8 wie folgt vorgenommen:

Es sei angenommen, daß der Winkel $\alpha$ zwischen der Längsachse 3 des Gehäuses 1 und der Längsachse 6 des Gehäuses 7 des Rohrleiters 4 30° betrage. Man wählt nun auf dem Flansch 9 des Gehäuses 1 eine bestimmte Bohrung 17 aus, deren Mitte man der Symmetrieachse 43 und der Längsachse 3 (siehe Figur 4) zuordnet.

Aus der Tabelle 1 ergibt sich, daß der Winkel $\alpha$ = 30° in einem dem Versatz $\delta_3$ = 9° zugeordneten Winkelbereich liegt, so daß entsprechend die mit $a_2$ bezeichnete Bohrung 23 auf dem Ring 19 zu der als Symmetrie- bzw. Längsachse angesehenen Bohrung 17 auf dem Flansch 9 zum Fluchten gebracht werden muß. Der Ring 19 kann nun mit Hilfe der Schrauben 24 an dem Flansch 9 befestigt werden.

Wird nun weiterhin mit Hilfe der Bolzen 34 der Ring 20 am Ring 19 befestigt, so kann unter Ausnutzung der Länge der Langlöcher 32 ein Fluchten auch der Bohrungen 22 und mit den Bohrungen 18 am Flansch 10 erreicht werden, so daß man den Flansch 10 in einfacher Weise mit Hilfe der Schrauben 28 am Ring 20 befestigen kann.

Bei dem in Figur 4 dargestellten Ausführungsbeispiel sind die Langlöcher 32 auf dem Ring 20 jeweils so angeordnet, daß an jeder Symmetrieachse 43, 44, 45, 46 die Außenkante eines Langloches 32 liegt. Figur 5 zeigt nun ein etwas abgewandeltes Ausführungsbeispiel mit gleichen Lochteilungen $\beta_i = 22,5°$ auf dem inneren Teilkreis 21 und $\beta_a = 18°$ auf dem äußeren Teilkreis 31 der Ringe 19, 20.

Bei diesem Ausführungsbeispiel ist, um eine symmetrische Anordnung der Langlöcher 32 im Bereich von $+\alpha = 90°$ bis $-\alpha = 90°$, d. h. im gesamten 180°-Bereich, zu erhalten, die Mitte des Langloches 32 jeweils auf die Symmetrieachse 43, 44, 45, 46 gelegt.

Dann gilt für die Anzahl der einstellbaren Winkelbereiche:

$$z = n_i \cdot n_a + 1 = 4 \cdot 5 + 1 = 21.$$

Entsprechend ändert sich die Lage der den einzelnen Versatzwerten $\delta_1$, $\delta_2$, $\delta_3$ und $\delta_4$ zugeordneten einstellbaren Winkelbereiche, siehe dazu die Tabelle 2.

Tabelle 2:

| $\alpha°$ | | | | |
|---|---|---|---|---|
| $\delta_1 = 0°$ ($a_0$ über X) | $\delta_2 = 4,5°$ ($a_1$ über X) | $\delta_3 = 9°$ ($a_2$ über X) | $\delta_4 = 13,5$ ($a_3$ über X) | |
| 0 − 2,25 | 2,25 − 6,75 | 6,75 − 11,25 | 11,25 − 15,75 | $n_a$ |
| 15,75 − 20,25 | 20,25 − 24,75 | 24,75 − 29,25 | 29,25 − 33,75 | |
| 33,75 − 38,25 | 38,25 − 42,75 | 42,75 − 47,25 | 47,25 − 51,75 | |
| 51,75 − 56,25 | 56,25 − 60,75 | 60,75 − 65,25 | 65,25 − 69,75 | |
| 69,75 − 74,25 | 74,25 − 78,75 | 78,75 − 83,25 | 83,25 − 87,75 | |
| 87,75 − 92,25 | | | | |

$n_i$

Die Ausrichtung des Ringes 19 mit den versetzten Bohrungen 23, 33 auf die Symmetrieachse 43 wird dann in gleicher Weise vorher beschrieben, entsprechend dem gewünschten Winkel $\alpha$ mit Hilfe der in Tabelle 2 gegebenen Werte, durchgeführt.

In den Figuren 6, 7 und 8 ist noch ein weiteres abgewandeltes Ausführungsbeispiel dargestellt, wobei ebenfalls für gleiche Teile gleiche Bezugszeichen beibehalten worden sind. Das in der Fig. 7 dargestellte Zwischenstück 8 entspricht im wesentlichen dem in Figur 3 gezeigten, nur die Dichtungsverhältnisse sind abgeändert. Bei dem Ausführungsbeispiel nach Fig. 7 liegen nämlich Dichtringe 47 nur im Ring 48 des Zwischenstücks 8, der die Langlöcher 32 aufweist. Der Ring 49 mit den Bohrungen 23, 33 hat dagegen keine Dichtringe.

Da somit auf den beiden bearbeiteten Außenflächen des Ringes 48, nämlich der äußeren Stirnfläche 50 und der inneren Stirnfläche 51, gleiche Dichtflächenbedingungen geschaffen werden, kann der Ring 48 umgewendet, d. h. über einen Durchmesser um 180° umgeklappt werden, ohne daß sich die Dichtverhältnisse ändern.

Dies bedeutet, daß bei der Wahl von jeweils um 90° auseinander liegenden Symmetrieachsen 43, 44, 45, 46, bei der beide Lochteilungen $\beta_i$ und $\beta_a$ jeweils auf 90° summierbar sind, das Umklappen über die gegenüberliegenden horizontalen Symmetrieachsen 44, 46 erfolgt. In diesem Fall kann man die Länge der Langlöcher 32 verkleinern, nämlich um den Faktor 2, so daß der Winkel

7

$$\gamma' = \frac{\beta_i \cdot \beta_a}{2 \cdot 90} = 2,25°$$

beträgt.

Man erhält also einen größeren verbleibenden Rest der Flanschfläche auf dem äußeren Teilkreis 31 des Ringes 48 mit den Langlöchern 32.

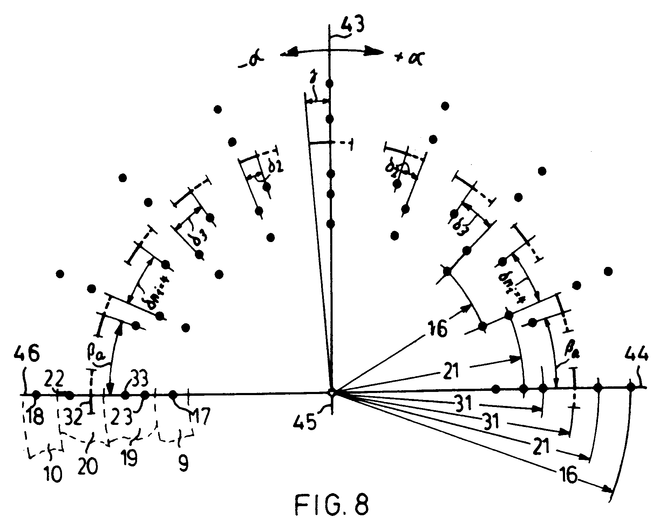

Durch das Umklappen um 180° ergibt sich, daß die Langlöcher 32 spiegelbildlich zueinander liegen und mit den kleineren Langlöchern der gesamte Einstellbereich überdeckt ist. Dies ist aus Figuren 6 und 8 ersichtlich, in denen die Lage der Langlöcher 32 zu den Symmetrieachsen 43, 44, 45, 46 jeweils so ausgerichtet ist, daß sich eine Außenkante des Langloches 32 auf der Symmetrieachse befindet. Nach dem Umwenden des Ringes um 180° über die beiden einander gegenüber liegenden Symmetrieachsen 44, 46 nehmen dann die Langlöcher 32 die gestrichelt eingezeichnete Lage ein. Der den gewünschten Winkel $\alpha$ zugehörige Winkelbereich läßt sich jetzt wieder aus der Tabelle 1 entnehmen.

**Patentansprüche**

1. Metallgekapselte, druckgasisolierte Hochspannungsanlage, deren Leiter (2, 5) oder Geräte in Gehäusen (1, 7) untergebracht sind, in denen sich die Leiter (2, 5) im wesentlichen in Richtung der Längsachse (3, 6) des Gehäuses (1, 7) erstrecken, und bei der die miteinander zu verbindende Gehäuse (1, 7) winklig zueinander stehende Längsachsen (3, 6) aufweisen und über ein zweiteiliges Zwischenstück (8) verbunden sind, wobei die Gehäuse (1, 7) mit dem Zwischenstück (8) jeweils über Flansche (9, 10) und diese durchsetzende Befestigungsmittel (24, 28) verbunden sind, **dadurch gekennzeichnet,** daß als Zwischenstück (8) zwei stirnseitig aneinander anliegende, gegeneinander und gegen die Flansche (9, 10) gasdicht abgedichtete Ringe (19, 20, 48, 49) dienen, die jeweils auf einem inneren und einem äußeren Teilkreis (21, 31) Gewinde-oder Durchgangsbohrungen aufweisen und von denen jeder Ring (19, 20) über die Befestigungsmittel (24, 28) auf dem inneren Teilkreis (21) an einem Flansch (9, 10) des Gehäuses (1, 7) befestigt ist,
daß die Ringe (19, 20) untereinander über weitere Befestigungsmittel (34) auf den äußeren Teilkreisen (31) jeweils gleichen Durchmessers verbunden sind, wobei der Durchmesser der äußeren Teilkreise (31) soviel größer als der Außendurchmesser der Flansche (9, 10) ist, daß die weiteren Befestigungsmittel (34) außerhalb der Flansche (9, 10) liegen,
daß die Bohrungen (22, 23, 32, 33) auf beiden Teilkreisen (21, 31) der Ringe (19, 20, 48, 49) eine unterschiedliche Lochteilung $\beta_i$, $\beta_a$ aufweisen, derart, daß beide Lochteilungen $\beta_i$, $\beta_a$ jeweils auf 90° oder 60° summierbar sind und
daß auf einem der Ringe (19, 20) die Bohrungen (32) auf dem äußeren Teilkreis (31) als Langlöcher (32) ausgebildet sind, deren Länge durch einen Winkel $\alpha$ gegeben ist, der sich als Quotient des Produktes der Lochteilungen $\beta_i$ $\beta_a$ durch den Bereich von 90° oder 60° ergibt, zu den sich beide Lochteilungen ($\beta_i$, $\beta_a$) jeweils summieren.

2. Metallgekapselte, druckgasisolierte Hochspannungsanlage nach Anspruch 1, **dadurch gekennzeichnet,** daß bei einem gewählten Bereich von 90° zwischen den Symmetrieachsen nur der Ring (20, 48) mit den Langlöchern (32) Gasdichtungen (47) aufweist und die Länge der Langlöcher (32) nur dem halben Winkel $\alpha$ entspricht.

3. Metallgekapselte, druckgasisolierte Hochspannungsanlage nach einem der Ansprüche 1 oder 2, **dadurch gekennzeichnet,** daß einer der Ringe (19, 20, 48, 49) auf dem inneren Teilkreis (21) einseitig mit Ansenkungen (26) zur Aufnahme der Köpfe (25) der Befestigungsmittel (24) versehen ist.

4. Metallgekapselte, druckgasisolierte Hochspannungsanlage nach Anspruch 1, 2 oder 3, **dadurch gekennzeichnet,** daß sich die Ansenkungen (26) auf dem Ring (19, 49) ohne Langlöcher (32) befinden.

5. Metallgekapselte, druckgasisolierte Hochspannungsanlage nach einem der Ansprüche 1 bis 4, **dadurch gekennzeichnet,** daß die Langlöcher (32) auf dem äußeren Teilkreis (31) des einen Ringes (20, 48) durch einen zusätzlichen Ring (38) abgedeckt sind, der mit Bohrungen (40) entsprechend der Lochteilung ($\beta_a$) und dem Durchmesser der Bohrungen (33) auf dem äußeren Teilkreis (31) des anderen Ringes (19, 49) versehen ist.

**6.** Metallgekapselte, druckgasisolierte Hochspannungsanlage nach Anspruch 5, **dadurch gekennzeichnet,** daß zumindest einer der mit dem Zwischenstück zu verbindenden Flansche (9, 10) des Gehäuses (1, 7) auf einem auf der Mantelfläche befindlichen Stutzen (11, 12) liegt und der sich in Langsrichtung des Gehäuses (1, 7) erstreckende Leiter (2, 5) rechtwinklig abgeknickt zu diesem Flansch (9, 10) geführt ist.

## Claims

**1.** A metal-clad, high-voltage installation which is insulated by compressed gas, the conductors (2,5) or apparatus of which are accommodated in housings (1,7), in which the conductors (2,5) extend substantially in the direction of the longitudinal axis (3,6) of the housing (1,7), and in which the housings (1,7) to be connected to each other have longitudinal axes (3,6) inclined at an angle to each other and are connected by way of a two-part intermediate piece (8), wherein the housings (1,7) are connected to the intermediate piece (8) in each case by way of flanges (9,10) and fastening means (24, 28) penetrating these, characterised in that serving as intermediate piece (8) there are two rings (19, 20, 48, 49) sealed against the flanges (9,10) and relative to each other in a gas tight manner and resting on each other on the end side, which rings in each case have on one inner and one outer partial circle (21,31) tapped holes or through-holes, and each ring (19,20) of which is fastened by way of the fastening means (24,28) on the inner partial circle (21) to one flange (9,10) of the housing (1,7), in that the rings (19,20) are connected below each other by way of further fastening means (34) on the outer partial circles (31) in each case of the same diameter, wherein the diameter of the outer partial circles (31) is so much greater than the outer diameter of the flanges (9,10) that the further fastening means (34) lie outside the flanges (9,10), that the bores (22,23,32,33) on both partial circles (21,31) of the rings (19,20, 48, 49) have a varying hole division $\beta_i, \beta_a$, such that both hole divisions $\beta_i$, $\beta_a$ in each case are able to be added to 90° or 60°, and that on one of the rings (19,20) the bores (32) on the outer partial circle (31) are formed as oblong holes (32), the length of which is given by an angle $\gamma$, which results as quotient of the product of the hole divisions $\beta_i \, \beta_a$ through the region of 90° or 60°, to which both hole divisions ($\beta_i$, $\beta_a$) are added respectively.

**2.** A metal-clad, high-voltage installation insulated by compressed gas, according to claim 1, characterised in that with a selected range of 90° between the symmetry axes only the ring (20,48) with the oblong holes (32) has gas seals (47) and the length of the oblong holes (32) only correspond to half the angle $\gamma$.

**3.** A metal-clad high-voltage installation, insulated by compressed gas, according to claims 1 or 2, characterised in that one of the rings (19,20,48,49) on the inner partial circle (21) is provided on one side with countersunk parts (26) for receiving the heads (25) of the fastening means (24).

**4.** A metal-clad high-voltage installation, insulated by compressed gas, according to claim 1,2 or 3, characterised in that the countersunk parts (26) are located on the ring (19,49) without oblong holes (32).

**5.** A metal-clad high-voltage installation insulated by compressed gas according to one of claims 1 to 4, characterised in that the oblong holes (32) are covered on the outer partial circle (31) of one ring (20,48) through an additional ring (38) which is provided with bores (40) corresponding to the hole division ($\beta_a$) and the diameter of the bores (33) on the outer partial circle (31) of the other ring (19,49).

**6.** A metal-clad, high-voltage installation, insulated by compressed gas, according to claim 5, characterised in that at least one of the flanges (9,10) of the housing (1,7) to be connected to the intermediate piece lies on a connecting piece (11,12) located on the surface and the conductor (2,5) and extending in the longitudinal direction of the housing (1,7) is guided at right angles, kinked, to this flange (9,10).

## Revendications

**1.** Installation à haute tension, à blindage métallique et à isolation par un gaz sous pression, dont les conducteurs (2,5) ou les appareils sont logés dans des boîtiers (1,7) dans lesquels les conducteurs (2,5) s'étendent sensiblement dans la direction de l'axe longitudinal (3,6) du boîtier (1,7), et dans laquelle les boîtiers (1,7), qui doivent être reliés entre eux, possèdent des axes longitudinaux (3,6) qui sont inclinés les uns par rapport aux autres et sont raccordés par l'intermédiaire d'une pièce intercalaire (8) formée de deux éléments, et dans laquelle les boîtiers (1,7) sont reliés à la pièce intercalaire (8) respectivement par l'intermédiaire de brides (9,10) et de moyens de fixation (24,28) traversant ces brides, caractérisée par le fait qu'il est prévu, comme pièce intercalaire (8), deux bagues (19,20,48,49), qui s'appliquent frontalement l'une contre l'autre, sont étanchéifiées d'une manière étanche au gaz l'une par rapport à l'autre et vis-à-vis des brides (9,10), possèdent des perçages taraudés ou des perçages traversants répartis respectivement sur un cercle primitif intérieur et un cercle primitif extérieur (21,31), chacune des bagues (19,20) étant fixée par l'intermédiaire des moyens de fixation (24,28) sur le cercle primitif intérieur (21) au niveau d'une bride (9,10) du boîtier (1,7), que les bagues (19,20) sont réunies entre elles par l'intermédiaire d'autres moyens de fixation (34) sur les cercles primitifs extérieurs (31) qui possèdent respectivement le même diamètre, le diamètre des cercles primitifs extérieurs (31) étant d'autant plus grand par rapport au diamètre extérieur des brides (9,10), que les autres moyens de fixation (34) sont situés à l'extérieur des brides (9,10),

que les perçages (22,23,32,33) situés sur les deux cercles primitifs (21,31) des bagues (19,20,48,49) possèdent des pas de répartition des trous différents $\beta_i,\beta_a$ de sorte que les deux pas $\beta_i,\beta_a$ de répartition des trous peuvent être additionnés respectivement sur 90° ou 60°, et

que dans l'une des bagues (19,20), les perçages (32) sont disposés sur le cercle primitif extérieur (31) sous la forme de trous allongés (32), dont la longueur est déterminée par un angle $\gamma$, qui est égal au quotient du produit des pas de répartition des trous $\beta_i.\beta_a$, par la plage angulaire de 90° ou 60°, pour laquelle les deux pas ($\beta_i$, $\beta_a$) de répartition des trous s'ajoutent respectivement.

2. Installation à haute tension à blindage métallique et à isolation par un gaz sous pression suivant la revendication 1, caractérisée par le fait que dans le cas d'une plage angulaire choisie de 90° entre les axes de symétrie, seule la bague (20,48) pourvue des trous allongés (32) possède des éléments d'étanchéité au gaz (47), et la longueur des trous allongés (32) correspond uniquement à la moitié de l'angle $\gamma$.

3. Installation à haute tension à blindage métallique et à isolation par un gaz sous pression, suivant l'une des revendications 1 ou 2, caractérisée par le fait que l'une des bagues (19,20,48,49) comporte sur une face, au niveau du cercle primitif intérieur (24), des renfoncements (26) servant à loger les têtes (25) des moyens de fixation (24).

4. Installation à haute tension à blindage métallique et à isolation par un gaz comprimé, selon la revendication 1, 2 ou 3, caractérisée par le fait que les renfoncements (26) sont situés sur la bague (19,49) sans trou allongé (32).

5. Installation à haute tension à blindage métallique et à isolation par un gaz comprimé, suivant l'une des revendications 1 à 4, caractérisée par le fait que les trous allongés (32) situés sur le cercle primitif extérieur (31) d'une bague (20,48) sont recouverts par une bague supplémentaire (38), qui comporte des perçages (40) d'une manière correspondant au pas ($\beta_a$) de répartition des trous et au diamètre des perçages (33) situés sur le cercle primitif extérieur (31) de l'autre bague (19,49).

6. Installation à haute pression à blindage métallique et à isolation par un gaz sous pression, suivant la revendication 5, caractérisée par le fait qu'au moins l'une des brides (9,10) du boîtier (1,7), qui doivent être réunies à la pièce intercalaire, est située sur une tubulure (11,12) disposée sur la surface enveloppe et que le conducteur (2,5), qui s'étend dans la direction longitudinale du boîtier (1,7), est guidé en étant coudé à angle droit par rapport à cette bride (9,10).

FIG.1

FIG.2

FIG.3

FIG.4

FIG.5

FIG.6

FIG.7

14

FIG. 8